# FASCICULE DE BREVET EUROPEEN

(11) **EP 0 578 563 B1**
(45) Date de publication et mention de la délivrance du brevet: **20.11.1996**
(21) Numéro de dépôt: 93401754.2
(22) Date de dépôt: 06.07.1993
(51) Int. Cl.: B60S 1/38

(54) **Balai d'essuie-glace**
Scheibenwischerblatt
Windscreen wiper blade

(30) Priorité: 07.07.1992 FR 9208386
(43) Date de publication de la demande: 12.01.1994
(73) Titulaire: VALEO SYSTEMES D'ESSUYAGE, 78180 Montigny-Le-Bretonneux (FR)
(72) Inventeur: Peyret, Xavier, F-63000 Clermont-ferrand (FR)
(74) Mandataire: Gamonal, Didier

(56) Documents cités:
- EP-A- 0 286 231
- FR-A- 2 600 291
- GB-A- 2 256 789
- US-A- 4 953 251

## Description

La présente invention concerne un balai d'essuie-glace notamment pour véhicule automobile.

L'invention concerne plus particulièrement un balai d'essuie-glace du type comportant un élément principal, également appelé étrier principal, prévu pour être relié à un bras d'entraînement du balai d'essuie-glace et qui porte une lame d'essuyage par l'intermédiaire d'au moins un élément intermédiaire, également appelé étrier intermédiaire ou palonnier, monté articulé sur l'élément principal autour d'un axe d'articulation sensiblement perpendiculaire à la direction longitudinale de l'élément principal, et du type dans lequel les moyens d'articulation de l'élément intermédiaire sur l'élément principal comportent un axe d'articulation porté par l'un des deux éléments et qui s'étend transversalement à l'intérieur d'une cavité et un organe formant palier d'articulation porté par l'autre des deux éléments et dans lequel l'axe d'articulation peut être introduit selon une direction perpendiculaire à l'axe d'articulation.

Un exemple d'une telle conception des moyens de montage et d'articulation d'un palonnier sur un étrier principal de balai d'essuie-glace sont décrits et représentés dans le document FR-A-2.469.324 dans lequel la cavité est formée dans la zone centrale du palonnier et comporte un axe d'articulation dont la section transversale comporte deux méplats tandis que l'extrémité libre de l'étrier principal comporte une fente dont la largeur correspond à la distance séparant les deux méplats et qui débouche dans un logement cylindrique formant palier d'articulation qui reçoit l'axe.

Cette conception permet de réaliser de manière économique les deux éléments par moulage en matière plastique, mais elle nécessite, pour l'introduction et la mise en place de l'axe d'articulation dans son logement formant palier, d'orienter la direction longitudinale du palonnier sensiblement perpendiculairement à la direction longitudinale de l'étrier principal. Cette manipulation est délicate et complexe et ne permet notamment pas de réaliser les opérations d'assemblage de manière automatisée.

Dans le document US-A-4,953,251, l'organe formant palier d'articulation comporte au moins une portion déformable élastiquement qui coopère avec l'axe d'articulation pour s'effacer lors de l'introduction dans la cavité de l'organe formant palier d'articulation afin de permettre à l'axe d'articulation de pénétrer dans un logement complémentaire de l'organe puis de verrouiller l'axe d'articulation en place dans le logement.

Cette conception a également pour inconvénient d'être peu fiable en utilisation car les efforts transversaux auxquels est soumise la lame d'essuyage sont transmis à l'étrier principal par l'intermédiaire de sa portion d'extrémité reçue dans la cavité et ils sont encaissés par les parois latérales de cette cavité et risquent de provoquer à terme une détérioration, voire une rupture, de l'articulation.

Afin de remédier à ces inconvénients, l'invention propose un balai d'essuie-glace du type mentionné précédemment (Balai du type divulgué dans FR-A-2 469 324 ou US-A-4 953 251), caractérisé en ce qu'il comporte, outre la cavité, un alvéole formé dans l'un des deux éléments et un pion de section complémentaire, formé en saillie sur l'autre des deux éléments et qui, en position assemblée des deux éléments, s'étend à l'intérieur de l'alvéole selon une direction parallèle à la direction d'introduction dans la cavité de l'organe formant palier d'articulation et qui est susceptible de coopérer avec des portions de parois latérales de l'alvéole pour transmettre à l'élément principal les efforts transversaux auxquels est soumis l'élément intermédiaire lors de l'essuyage.

Selon divers modes de réalisation de l'invention :
- les sections de l'alvéole et du pion sont rectangulaires ;
- le pion et l'organe de verrouillage formant palier d'articulation sont portés par le même élément.
- la direction d'introduction de l'organe formant palier dans la cavité est sensiblement perpendiculaire à la direction longitudinale de l'élément principal ;
- l'axe d'articulation comporte au moins un tronçon d'axe d'articulation qui s'étend transversalement à l'intérieur de la cavité depuis une face latérale de cette dernière, l'organe formant palier comportant une lame déformable élastiquement qui s'étend dans un plan perpendiculaire à l'axe d'articulation et qui comporte un trou cylindrique dans lequel s'étend l'extrémité du tronçon de l'axe d'articulation ;
- des moyens formant rampes sont prévus sur le tronçon de l'axe d'articulation et/ou sur la lame de manière à provoquer l'effacement de la lame par déformation de cette dernière autour d'un axe sensiblement perpendiculaire à l'axe d'articulation et à la direction d'introduction de la lame dans la cavité ;
- l'axe d'articulation comporte deux tronçons d'axe d'articulation qui s'étendent coaxialement à l'intérieur de la cavité depuis les deux faces latérales opposées de cette dernière, l'organe formant palier comportant deux lames déformables élastiquement qui s'étendent dans des plans perpendiculaires à l'axe d'articulation et qui comportent chacune un trou cylindrique dans lequel est reçue l'extrémité de l'un des tronçons de l'axe d'articulation ;
- l'élément principal est réalisé par moulage, notamment en matière plastique, et l'organe formant palier d'articulation est réalisé venu de matière avec l'élément principal ;
- l'organe formant palier d'articulation comporte deux parois transversales parallèles de guidage qui coopèrent avec deux faces transversales opposées de la cavité ;

D'autres caractéristiques et avantages de l'invention apparaîtront à la lecture de la description détaillée qui va suivre pour la compréhension de laquelle on se reportera aux dessins annexés dans lesquels :
- La figure 1 est une vue latérale d'un étrier principal d'un balai d'essuie-glace réalisé conformément aux enseignements de l'invention ;
- la figure 2 est une vue de dessus de l'étrier principal illustré à la figure 1 ;
- la figure 3 est une vue en section à plus grande échelle selon la ligne 3-3 de la figure 1 ;
- la figure 4 est une vue en section selon la ligne 4-4 de la figure 3 ;
- la figure 5 est une vue latérale, en section partielle selon la ligne 5-5 de la figure 6, d'un étrier intermédiaire prévu pour être monté sur l'étrier principal illustré aux figures 1 à 4 ;
- la figure 6 est une vue de dessus de l'étrier secondaire illustré à la figure 5 ; et
- la figure 7 est une vue de détail en section illustrant les deux étriers en position assemblée.

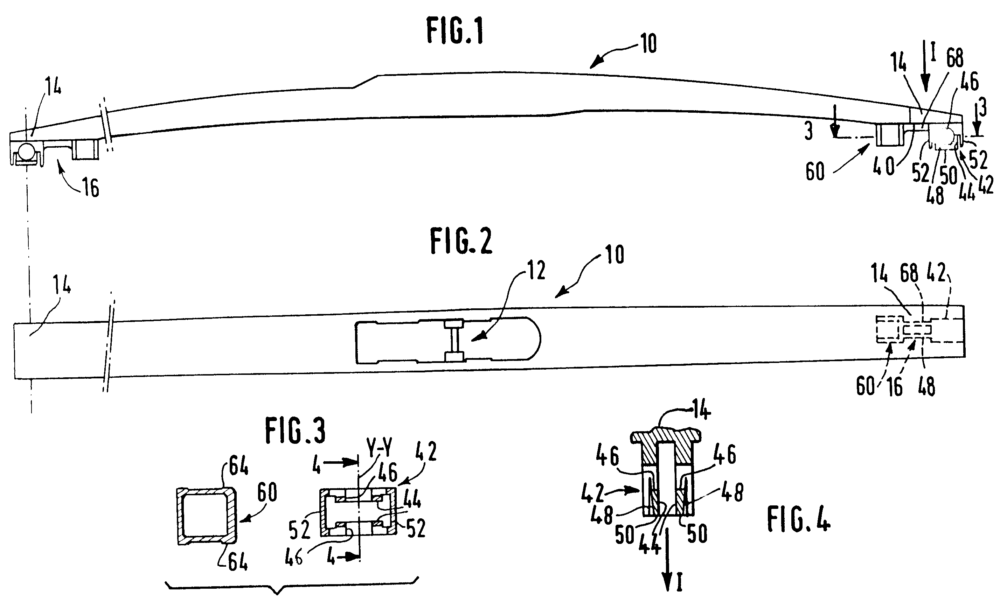

Selon une conception connue, l'étrier principal 10 illustré aux figures 1 et 2 est une pièce de forme générale allongée réalisée par moulage en matière plastique et qui comporte dans sa partie centrale un axe 12 permettant de le relier de manière articulée à l'extrémité libre d'un bras d'essuie-glace (non représenté) pour son entraînement dans un mouvement de balayage alternatif.

Chacune des deux extrémités libres opposées 14 de l'étrier principal 10 comporte des moyens 16 pour le montage et l'articulation d'un étrier intermédiaire, également appelé palonnier.

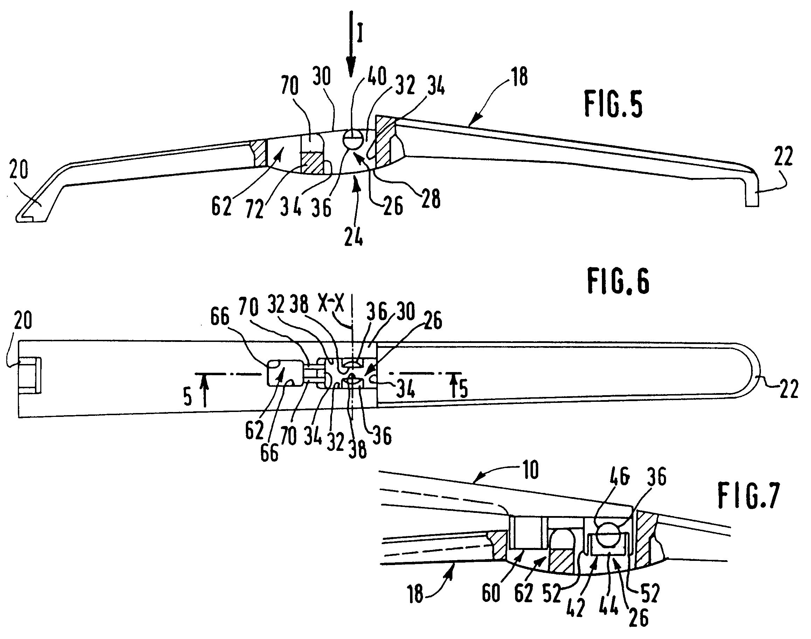

Un tel étrier intermédiaire 18 est illustré aux figures 5 et 6.

Selon une conception connue, l'étrier intermédiaire 18 est une pièce de forme générale allongée réalisée par moulage en matière plastique et dont les extrémités libres opposées 20 et 22 comportent, dans le cas des figures représentées, respectivement des moyens d'accrochage pour une lame d'essuyage (non représentée) et pour la protection de l'extrémité libre de cette dernière.

La portion médiane de l'étrier intermédiaire 18 comporte des moyens 24 pour son montage et son articulation sur l'une ou l'autre des extrémités 14 de l'étrier principal 10 qui sont complémentaires des moyens 16.

On décrira maintenant en détail les moyens de montage et d'articulation 24.

La portion médiane de l'étrier secondaire 18 comporte une cavité 26 de section sensiblement rectangulaire qui est ouverte à la face inférieure 28 de l'étrier 18 ainsi qu'à la face supérieure 30 de manière à définir une face ouverte supérieure de la cavité 26.

La cavité 26 est délimitée latéralement par deux faces latérales opposées et parallèles 32 ainsi que par deux faces transversales opposées et parallèles 34.

Chacune des faces latérales 32 de la cavité 26 comporte un tronçon 36 d'un axe cylindrique d'articulation d'axe géométrique X-X qui s'étend selon une direction perpendiculaire aux faces latérales 32 et à la direction longitudinale de l'étrier intermédiaire 18.

Les deux tronçons d'axe d'articulation 36 sont réalisés venus de moulage avec l'étrier intermédiaire 18 et font saillie transversalement à l'intérieur de la cavité 26 de manière que leurs faces d'extrémité 38 soient éloignées l'une de l'autre afin de permettre l'introduction entre elles d'un organe formant palier d'articulation comme cela sera décrit par la suite.

Chacune des faces d'extrémité 38 comporte un pan incliné 40 constituant une rampe d'introduction.

On décrira maintenant, en se référant à la partie droite des figures 1 et 2, les moyens 16.

La face inférieure 40 de l'étrier principal 10 comporte un organe de verrouillage formant palier d'articulation 42 réalisé venu de moulage avec l'étrier principal 10.

L'organe 42 est constitué pour l'essentiel par deux lames 44 qui sont déformables élastiquement et qui s'étendent dans deux plans parallèles à la direction longitudinale de l'étrier principal verticalement vers le bas depuis la face inférieure 40 de celui-ci, en considérant la figure 1.

Chacune des lames 44 comporte un trou cylindrique 46 dont le diamètre est légèrement supérieur à celui des tronçons 36 de manière que les extrémités de ceux-ci puissent pénétrer dans les trous 46.

Chacune des lames 44 est susceptible de se déformer élastiquement de manière à permettre son pivotement autour d'un axe fictif parallèle à la direction longitudinale de l'étrier 10 et perpendiculaire à l'axe Y-Y des trous 46.

Les faces latérales extérieures des lames 44 comportent chacune une rampe 48 dont la ligne de pente s'étend depuis le bord libre 50 de la lame jusqu'au bord du trou cylindrique 46.

L'organe 42 comporte également deux parois transversales 52 qui sont espacées longitudinalement d'une distance légèrement inférieure à la distance qui sépare les parois transversales 34 de la cavité 26.

La mise en place de l'organe de verrouillage 42 dans la cavité 26 s'effectue de la manière suivante.

L'organe 42 est introduit dans la face supérieure ouverte de la cavité 26 selon une direction d'introduction "I" qui est perpendiculaire à l'axe X-X et à la direction longitudinale de l'étrier principal 10 et de l'étrier secondaire 18.

Au cours de cette introduction, les extrémités libres 50 des lames déformables 44 sont reçues entre les faces d'extrémité en vis-à-vis 38 des tronçons d'axe d'articulation 36.

La coopération des rampes 48 avec les pans inclinés 40 provoque la déformation élastique des lames 44 qui tendent à se rapprocher l'une de l'autre de manière à permettre la venue en vis-à-vis des tronçons 36 avec les trous cylindriques 46, puis le verrouillage en position des tronçons dans les trous grâce au retour élastique en position des lames 44 dans la configuration qu'elles occupent au repos et qui est illustrée aux figures 3 et 4.

Au cours de cette introduction, l'organe 42 est guidé transversalement par les parois 52 qui coopèrent avec les faces 34 de la cavité 36.

Lorsque la mise en place est terminée, l'étrier intermédiaire 18 est monté articulé par rapport à l'étrier principal 10 du fait de la coopération des tronçons 36 qui sont reçus dans les trous cylindriques 46 formant paliers d'articulation et est verrouillé dans cette position car les tronçons 36 ne peuvent plus s'échapper des trous 46 sans intervention positive visant à déformer à nouveau les lames 44.

Conformément à l'invention, il est prévu des moyens complémentaires formés respectivement sur l'étrier principal et sur l'étrier intermédiaire 18 afin de transmettre les efforts transversaux auxquels est soumis l'étrier intermédiaire 18 à l'étrier principal 10 sans agir de manière nuisible sur les moyens d'articulation de l'étrier intermédiaire 18.

Ces moyens sont constitués par un pion 60, par exemple de section rectangulaire, qui s'étend depuis la face inférieure 40 de l'étrier principal 10 selon une direction perpendiculaire à la direction longitudinale de l'étrier principal 10 et parallèle à la direction "I" d'introduction de l'organe de verrouillage 42.

Le pion 60 est réalisé venu de moulage avec l'étrier principal 10 sous la forme d'un élément creux.

Le pion 60 est prévu pour être reçu dans un alvéole 62 de section rectangulaire complémentaire qui est formé dans la partie médiane de l'étrier intermédiaire 18 à proximité de la cavité 26 et qui est ouvert dans la face supérieure 30 de l'étrier intermédiaire 18.

Le pion 60 et l'alvéole 62 présentent des dimensions sensiblement complémentaires de manière que les faces latérales parallèles 64 du pion 60 puissent coopérer avec les faces latérales parallèles 66 de l'alvéole 62 pour transmettre les efforts transversaux auxquels est soumis l'étrier intermédiaire 18 à l'étrier principal 10.

Afin d'éviter tout phénomène de fléchissement transversal du pion 60, celui-ci est relié à l'organe de verrouillage 42 par deux nervures 68 qui sont elles-mêmes reçues dans deux rainures 70 formées dans la cloison 72 qui sépare la cavité 26 de l'alvéole 62 et qui renforce la structure de la partie médiane de l'étrier intermédiaire 18.

Le pion 60 constitue avantageusement un moyen de détrompage qui n'autorise le montage de l'étrier intermédiaire sur l'étrier principal que dans une seule position.

## Revendications

1. Balai d'essuie-glace, notamment pour véhicule automobile, du type comportant un élément principal prévu pour être relié à un bras d'entraînement du balai d'essuie-glace et qui porte une lame d'essuyage par l'intermédiaire d'au moins un élément intermédiaire (18) monté articulé sur l'élément principal (10) autour d'un axe d'articulation sensiblement perpendiculaire à la direction longitudinale de l'élément principal (10), et du type dans lequel les moyens d'articulation de l'élément intermédiaire (18) sur l'élément principal (10) comportent un axe d'articulation (36) porté par l'un (18) des deux éléments (10, 18) et qui s'étend transversalement à l'intérieur d'une cavité (26) et un organe de verrouillage (42) formant palier d'articulation porté par l'autre (10) des deux éléments, et dans lequel l'axe d'articulation (36) peut être introduit selon une direction (I) perpendiculaire à l'axe d'articulation, et l'organe (42) formant palier d'articulation comporte au moins une portion déformable élastiquement (44) qui coopère avec l'axe d'articulation (36) pour s'effacer lors de l'introduction dans la cavité (26) de l'organe (42) formant palier d'articulation afin de permettre à l'axe d'articulation (36) de pénétrer dans un logement complémentaire (46) de l'organe (42) puis de verrouiller l'axe d'articulation (36) en place dans le logement (46), caractérisé en ce qu'il comporte, outre la cavité (26), un alvéole (62) formé dans l'un (18) des deux éléments et un pion (60) de section complémentaire, formé en saillie sur l'autre (10) des deux éléments et qui, en position assemblée des deux éléments (10, 18), s'étend à l'intérieur de l'alvéole (62) selon une direction parallèle à la direction (I) d'introduction dans la cavité (26) de l'organe formant palier d'articulation (42) et qui est susceptible de coopérer avec des portions de parois latérales (66) de l'alvéole (62) pour transmettre à l'élément principal (10) les efforts transversaux auxquels est soumis l'élément intermédiaire (18) lors de l'essuyage.

2. Balai d'essuie-glace selon la revendication 1, caractérisé en ce que les sections de l'alvéole (62) et du pion (60) sont rectangulaires.

3. Balai d'essuie-glace selon l'une des revendications 1 ou 2, caractérisé en ce que le pion (60) et l'organe de verrouillage formant palier d'articulation (42) sont portés par le même élément (10).

4. Balai d'essuie-glace selon l'une des revendications 1 à 3, caractérisé en ce que la direction d'introduction (I) de l'organe (42) formant palier dans la cavité (26) est sensiblement perpendiculaire à la direction longitudinale de l'élément principal (10).

5. Balai d'essuie-glace selon l'une des revendications 1 à 4, caractérisé en ce que l'axe d'articulation comporte au moins un tronçon d'axe d'articulation (36) qui s'étend transversalement à l'intérieur de la cavité (26) depuis une face latérale (32) de cette dernière, et en ce que ledit organe (42) formant palier comporte une lame déformable élastiquement (44) qui s'étend dans un plan perpendiculaire à l'axe d'articulation et qui comporte un trou cylindrique (46) dans lequel est reçue l'extrémité du tronçon (36) de l'axe d'articulation.

6. Balai d'essuie-glace selon la revendication 5, caractérisé en ce que des moyens (40, 48) formant rampes sont prévus sur le tronçon (36) de l'axe d'articulation et/ou sur la lame déformable élastiquement (44) de manière à provoquer l'effacement de la lame (44) par déformation de cette dernière autour d'un axe sensiblement perpendiculaire à l'axe d'articulation et à la direction d'introduction (I) de la lame (44) dans la cavité (26).

7. Balai d'essuie-glace selon l'une des revendications 5 ou 6, caractérisé en ce que l'axe d'articulation comporte deux tronçons d'axe d'articulation (36) qui s'étendent coaxialement (X-X) à l'intérieur de la cavité (26) depuis les deux faces latérales (32) opposées de cette dernière, et en ce que ledit organe de verrouillage formant palier d'articulation comporte deux lames déformables élastiquement (44) qui s'étendent dans des plans perpendiculaires à l'axe d'articulation, qui comportent chacune un trou cylindrique (46) dans lequel est reçue l'extrémité de l'un des deux tronçons (36) de l'axe d'articulation.

8. Balai d'essuie-glace selon la revendication 7, caractérisé en ce que l'organe (42) formant palier d'articulation comporte deux parois transversales parallèles (52) de guidage qui coopèrent avec deux faces transversales opposées (34) de la cavité (28).

9. Balai d'essuie-glace selon l'une des revendications précédentes, caractérisé en ce que l'élément principal est réalisé par moulage, notamment en matière plastique, et en ce que l'organe de verrouillage formant palier d'articulation (42) est réalisé venu de matière avec l'élément principal (10).

10. Balai d'essuie-glace selon la revendication 9, caractérisé en ce que la face ouverte de la cavité (8 et 26) pour l'introduction de l'organe de verrouillage formant palier d'articulation est formée dans la face supérieure (30) de l'élément intermédiaire (18).

## Claims

1. Windscreen wiper, notably for a motor vehicle, of the type having a main element designed to be connected to an arm driving the windscreen wiper and which carries a wiper blade by means of at least one intermediate element (18) mounted so as to pivot on the main element (10) about a pivot pin substantially perpendicular to the longitudinal direction of the main element (10), and of the type in which the means of pivoting the intermediate element (18) on the main element (10) include a pivot pin (36) carried by one (18) of the two elements (10, 18) and which extends transversely inside a cavity (26) and a locking member (42) forming a pivot bearing carried by the other one (10) of the two elements, and in which the pivot pin (36) can be inserted in a direction (I) perpendicular to the pivot pin, and the member (42) forming a pivot bearing has at least one elastically deformable portion (44) which cooperates with the pivot pin (36) so as to retract when the member (42) forming a pivot bearing is inserted into the cavity (26) in order to enable the pivot pin (36) to enter a complementary housing (46) in the member (42) and then to lock the pivot pin (36) in place in the housing (46), characterised in that it includes, in addition to the cavity (26), an alveolus (62) formed in one (18) of the two elements and a stud (60) of complementary cross section, formed so as to project on the other one (10) of the two elements and which, in the assembled position of the two elements (10, 18), extends inside the alveolus (62) in a direction parallel to the direction (I) of insertion in the cavity (26) of the member forming a pivot bearing (42) and which is able to cooperate with side wall portions (66) of the alveolus (62) in order to transmit to the main element (10) the transverse forces to which the intermediate element (18) is subjected during wiping.

2. Windscreen wiper according to Claim 1, characterised in that the cross sections of the alveolus (62) and of the stud (60) are rectangular.

3. Windscreen wiper according to one of Claims 1 or 2, characterised in that the stud (60) and the locking member forming a pivot bearing (42) are carried by the same element (10).

4. Windscreen wiper according to one of Claims 1 to 3, characterised in that the direction of insertion (I) of the member (42) forming a bearing into the cavity (26) is substantially perpendicular to the longitudinal direction of the main element (10).

5. Windscreen wiper according to one of Claims 1 to 4, characterised in that the pivot pin has at least one pivot pin length (36) which extends transversely inside the cavity (26) from a side face (32) of the latter, and in that the said member (42) forming a bearing has an elastically deformable blade (44) which extends in a plane perpendicular to the pivot pin and which has a cylindrical hole (46) in which the end of the length (36) of the pivot pin is received.

6. Windscreen wiper according to Claim 5, characterised in that means (40, 48) forming slopes are provided on the length (36) of the pivot pin and/or on the elastically deformable blade (44) so as to cause the retraction of the blade (44) through deformation of the latter about an axis substantially perpendicular to the pivot pin and to the direction of insertion (I) of the blade (44) into the cavity (26).

7. Windscreen wiper according to one of Claims 5 or 6, characterised in that the pivot pin has two pivot pin lengths (36) which extend coaxially (X-X) inside the cavity (26) from the two opposite side faces (36) of the latter, and in that the said locking member forming a pivot bearing has two elastically deformable blades (44) which extend in planes perpendicular to the pivot pin, which each have a cylindrical hole (26) in which the end of one of the two lengths (36) of the pivot pin is received.

8. Windscreen wiper according to Claim 7, characterised in that the member (42) forming a pivot bearing has two parallel transverse guide walls (52) which cooperate with two opposite transverse faces (34) of the cavity (28).

9. Windscreen wiper according to one of the preceding claims, characterised in that the main element is produced by moulding, notably from plastic, and in that the locking member forming a pivot bearing (42) is produced in one piece with the main element (10).

10. Windscreen wiper according to Claim 9, characterised in that the open face of the cavity (8 and 26) for inserting the locking member forming a pivot bearing is formed in the top face (30) of the intermediate element (18).

## Patentansprüche

1. Scheibenwischerblatt, insbesondere für Kraftfahrzeuge, in der Ausführung mit einem Hauptelement, das für die Verbindung mit einem Wischerarm für die Mitnahme des Scheibenwischerblatts vorgesehen ist und das einen Wischergummi über wenigstens ein Zwischenelement (18) trägt, das am Hauptelement (10) schwenkbar um eine Gelenkachse gelagert ist, die in etwa senkrecht zur Längsrichtung des Hauptelements (10) verläuft, und in der Ausführung, in der die Mittel für die schwenkbare Lagerung des Zwischenelements (18) am Hauptelement (10) eine Gelenkachse (36), die an einem (18) der beiden Elemente (10, 18) angebracht ist und die sich quer in das Innere einer Austiefung (26) erstreckt, und ein als Gelenklager ausgebildetes Befestigungsorgan (42) umfassen, das an dem anderen (10) der beiden Elemente angebracht ist und in das die Gelenkachse (36) in einer Richtung (I) eingesetzt werden kann, die senkrecht zur Gelenkachse verläuft, wobei das als Gelenklager ausgebildete Organ (42) wenigstens einen elastisch verformbaren Abschnitt (44) umfaßt, der so mit der Gelenkachse (36) zusammenwirkt, daß er sich beim Einsetzen des als Gelenklager ausgebildeten Organs (42) in die Austiefung (26) versenken läßt, damit die Gelenkachse (36) in eine formschlüssige Aufnahme (46) des Organs (42) eindringen und damit die Glenkachse (36) anschließend in ihrer Position in der Aufnahme (46) befestigt werden kann , **dadurch gekennzeichnet,** daß es außer der Austiefung (26) einen in einem (18) der beiden Elemente ausgebildeten Hohlraum (62) und einen an dem anderen (10) der beiden Elemente vorspringend ausgebildeten Stift (60) mit formschlüssigem Querschnitt umfaßt, der sich in zusammengefügter Position der beiden Elemente (10, 18) im Innern des Hohlraums (62) in einer Richtung erstreckt, die parallel zur Richtung (I) für das Einsetzen des als Gelenklager ausgebildeten Organs (42) in die Austiefung (26) verläuft, und der mit Seitenwandabschnitten (66) des Hohlraums (62) zusammenwirken kann, um die beim Wischen auf das Zwischenelement (18) einwirkenden Querbeanspruchungen auf das Hauptelement (10) zu übertragen.

2. Scheibenwischerblatt nach Anspruch 1, **dadurch gekennzeichnet,** daß die Querschnitte des Hohlraums (62) und des Stifts (60) rechteckig ausgeführt sind.

3. Scheibenwischerblatt nach einem der Ansprüche 1 oder 2 , **dadurch gekennzeichnet**, daß der Stift (60) und das als Gelenklager ausgebildete Befestigungsorgan (42) an dem gleichen Element (10) angebracht sind.

4. Scheibenwischerblatt nach einem der Ansprüche 1 bis 3 , **dadurch gekennzeichnet**, daß die Richtung (I) für das Einsetzen des als Lager ausgebildeten Organs (42) in die Austiefung (26) in etwa senkrecht zur Längsrichtung des Hauptelements (10) verläuft.

5. Scheibenwischerblatt nach einem der Ansprüche 1 bis 4 , **dadurch gekennzeichnet**, daß die Gelenkachse wenigstens ein Gelenkachsenteilstück (36) umfaßt, das sich quer in das Innere der Austiefung (26) von einer Seitenfläche (32) dieser Austiefung aus erstreckt, und daß das besagte als Lager ausgebildete Organ (42) eine elastisch verformbare Leiste (44) umfaßt, die sich in einer senkrecht zur Gelenkachse verlaufenden Ebene erstreckt und die eine zylindrische Bohrung (46) enthält, die das Ende des Gelenkachsenteilstücks (36) aufnimmt.

6. Scheibenwischerblatt nach Anspruch 5**, dadurch gekennzeichnet**, daß auf dem Gelenkachsenteilstück (36) und/oder auf der elastisch verformbaren Leiste (44) als Schägen ausgebildete Mittel (40, 48) vorgesehen sind, um das Versenken der Leiste (44) durch deren Verformung um eine Achse zu bewirken, die in etwa senkrecht zur Gelenkachse und zur Richtung (I) für das Einsetzen der Leiste (44) in die Austiefung (26) verläuft.

7. Scheibenwischerblatt nach einem der Ansprüche 5 oder 6 , **dadurch gekennzeichnet**, daß die Gelenkachse zwei Gelenkachsenteilstücke (36) umfaßt, die sich koaxial (X-X) im Innern der Austiefung (26) von den beiden gegenüberliegenden Seitenflächen (32) dieser Austiefung aus erstrecken, und daß das besagte als Gelenklager ausgebildete Befestigungsorgan zwei elastisch verformbare Leisten (44) umfaßt, die sich in senkrecht zur Gelenkachse angeordneten Ebenen erstrecken und die jeweils eine zylindrische Bohrung (46) enthalten, in die das Ende eines der beiden Gelenkachsenteilstücke (36) eingesetzt wird.

8. Scheibenwischerblatt nach Anspruch 7, **dadurch gekennzeichnet**, daß das als Gelenklager ausgebildete Organ (42) zwei parallele Führungsquerwände (52) umfaßt, die mit zwei gegenüberliegenden Querflächen (34) der Austiefung (28) zusammenwirken.

9. Scheibenwischerblatt nach einem der vorangehenden Ansprüche, **dadurch gekennzeichnet**, daß das Hauptelement als Formteil, insbesondere aus Kunststoff, ausgeführt ist und daß das als Gelenklager ausgebildete Organ (42) einstückig am Hauptelement angeformt ist (10).

10. Scheibenwischerblatt nach Anspruch 9, **dadurch gekennzeichnet**, daß die offene Seite der Austiefung (8 und 26) für das Einsetzen des als Gelenklager ausgebildeten Befestigungsorgans in der Oberseite (30) des Zwischenelements (18) vorgesehen ist.
